# EUROPÄISCHE PATENTSCHRIFT

(11) **EP 3 297 805 B1**
(45) Veröffentlichungstag und Bekanntmachung des Hinweises auf die Patenterteilung: **08.04.2020**
(21) Anmeldenummer: 16728628.5
(22) Anmeldetag: 20.05.2016
(51) Int. Cl.: B29C 48/00, B29C 48/20

(54) **VERFAHREN ZUR HERSTELLUNG EINES STRANGGUTS SOWIE VERWENDUNG**
METHOD FOR PRODUCING A CONTINUOUS CASTING AND RELEATED USE
PROCEDE DE PRODUCTION D'UN CASTING CONTINU ET UTILISATION ASSOCIÉE

(30) Priorität: 22.05.2015 DE 102015209394
(43) Veröffentlichungstag der Anmeldung: 28.03.2018
(73) Patentinhaber: LEONI Kabel GmbH, 90402 Nürnberg (DE)
(72) Erfinder: ERNST, Christian, 91781 Weissenburg (DE); GOSS, Sebastian, 91154 Roth (DE); WENZEL, Jörg, 91154 Roth (DE)
(74) Vertreter: FDST Patentanwälte
(86) Internationale Anmeldenummer: PCT/EP2016/061426
(87) Internationale Veröffentlichungsnummer: WO 2016/188900

(56) Entgegenhaltungen:
- WO-A1-02/07948
- DE-A1- 2 338 186
- DE-A1- 2 940 723
- GB-A- 2 275 363
- US-A- 3 422 648
- US-A- 4 657 050
- US-B1- 6 257 863

## Beschreibung

Die Erfindung betrifft ein Verfahren zur Herstellung eines Strangguts.

Als Stranggut werden häufig jegliche langgestreckten Bauteile bezeichnet, welche üblicherweise mittels eines Extrusionsverfahrens und insbesondere als Endlosware hergestellt werden. Beispiele für Stranggut sind Kabel und Schläuche.

Ein Kabel umfasst typischerweise eine innenliegende Kabelseele und einen diese umgebenden Mantel, welcher regelmäßig aus einem isolierenden Material gefertigt ist. Am Kabel werden bei dessen Herstellung zudem häufig weitere Formteile angebracht, wie beispielsweise Steckergehäuse, Tüllen, Dichtungen oder Kombinationen hiervon. Solche Formteile sind regelmäßig aus Kunststoff gefertigt und dabei zuweilen aus einem ähnlichen Material wie der Mantel des Kabels. Ein einzelnes Formteil wird dann im Zuge der Herstellung des Kabels an diesem, insbesondere an dessen Mantel, befestigt. Beispielsweise wird eine separat gefertigte Tülle aufgeschoben oder ein Steckergehäuse wird als Spritzgussteil angegossen. Problematisch sind generell besonders die Dichtigkeit sowie die Zugfestigkeit der Verbindung zwischen dem angebrachten Formteil und dem Mantel, besonders in denjenigen Fällen, in welchen das Formteil lediglich aufgeschoben oder aufgesetzt wird. Sicherere Verbindungsmethoden, wie beispielsweise Umspritzen oder Verschweißen sind dagegen vergleichsweise aufwendig.

Schläuche sind häufig mehrschichtig ausgebildet und weisen dann mehrere in radialer Richtung aufeinanderfolgende Schichten, Lagen und/oder Mäntel auf. In einer typischen Ausgestaltung weist ein Schlauch einen Mantel auf, der auf eine innerhalb des Mantels liegende Schlauchseele aufgebracht ist, insbesondere aufextrudiert Ist. Die Schlauchseele ist dabei typischerweise hohl, umfasst also einen Hohlraum, und regelmäßig noch hinreichend temperatur- und formstabil, um als Kerneinlauf einem Extrusionsprozess zugeführt zu werden. Die Schlauchseele dient dann als Tragkörper für den aufgebrachten Mantel. Besonders im Automobilbereich sind entsprechende Schläuche im Einsatz, welche beispielsweise als verstärkte Schläuche oder Schlauchpakete bezeichnet werden und einen mehrschichtigen Aufbau mit zumindest einem aufextrudierten Mantel aufweisen. Innerhalb des Schlauchs werden dann beispielsweise elektrische Leitungen oder Medienschläuche geführt, In ähnlicher Weise wie bei den oben erwähnten Kabeln ist es je nach Anwendung sinnvoll, den Mantel des Schlauchs mit einem zusätzlichen Formteil zu versehen. Dabei ergeben sich prinzipbedingt dieselben oder zumindest ähnliche Herausforderungen.

Verschiedene Extrusionsverfahren sind beschrieben in der DE 2 940 723 A1, der US 4 557 050 A und der US 3 422 648 A. Ein Verfahren nach dem Oberbegriff des Anspruchs 1 ist beschrieben in der WO 02/07948 A1.

Vor diesem Hintergrund ist es eine Aufgabe der Erfindung, ein verbessertes Verfahren zur Herstellung eines Strangguts, insbesondere eines Kabels oder eines Schlauchs, mit einem daran angebrachten Formteil anzugeben. Dabei soll die Herstellung möglichst einfach sein und insbesondere soll zugleich eine möglichst gute Dichtigkeit zwischen Formteil und Stranggut gewährleistet sein. Weiterhin soll ein Stranggut, insbesondere Kabel oder Schlauch angegeben werden, welches mittels des Verfahrens hergestellt ist. Desweiteren soll eine Formeinheit zur Verwendung bei dem Verfahren angegeben werden.

Die Aufgabe wird erfindungsgemäß gelöst durch ein Verfahren mit den Merkmalen gemäß Anspruch 1 sowie durch die Verwendung einer Vorrichtung mit den Merkmalen gemäß Anspruch 15. Vorteilhafte Ausgestaltungen, Weiterbildungen und Varianten sind Gegenstand der Unteransprüche. Die Ausführungen im Zusammenhang mit dem

Verfahren gelten dabei sinngemäß auch für ein Stranggut sowie für die Vorrichtung und die Verwendung der Vorrichtung und umgekehrt.

Das Verfahren dient zur Herstellung, insbesondere Endlosherstellung, eines Strangguts, vorzugsweise eines Kabels oder Schlauchs. Das Stranggut ist insbesondere flexibel, d.h. biegeweich. Dabei wird zunächst mittels einer Extrusionseinheit auf eine Seele oder auch Innenkörper des Strangguts ein Material, beispielsweise ein Kunststoff, als Mantel mit einer vorgegebenen Wandstärke aufextrudiert. Das Stranggut ist somit zumindest zweiteilig, weist nämlich eine Seele und einen darauf extrudierten Mantel auf.

Die Extrusion erfolgt derart, dass zumindest abschnittweise die Seele des Strangguts kontinuierlich durch einen Extrusionskopf der Extrusionseinheit gefördert wird. Das Material wird dem Extrusionskopf als extrudierte Masse zugeführt und dann mittels des Extrusionskopfs als gleichmäßiger Mantel mit zunächst im Wesentlichen konstanter Wandstärke aufgetragen. Hierbei weist die Extrusionseinheit weiterhin insbesondere einen Extruder, z.B. Schneckenextruder auf, welcher das Material als extrudierte Masse bereitstellt.

Hinter der Extrusionseinheit und während das Material noch formbar ist wird das Stranggut in einer Förderrichtung einer Formeinheit zugeführt. Insbesondere entspricht die Förderrichtung dabei einer Längsrichtung, in welcher sich das Stranggut erstreckt. Mittels der Formeinheit wird dann ein Teil des Materials insbesondere entlang der Längsrichtung angestaut. Darunter wird insbesondere verstanden, dass dieser Teil des Materials sozusagen festgehalten wird und damit gegenüber dem restlichen Material also verschoben oder abgeschabt wird. Unter Teil des Materials wird dabei zunächst allgemein insbesondere ein Teil bezüglich des gesamten Materials, welches auf die Seele aufgebracht wird, verstanden. Aus dem angestauten Material wird dann am Mantel einstückig ein Formteil ausgebildet. Beim Anstauen des Materials wird die Wandstärke des Mantels hinter der Formeinheit reduziert, d.h. es wird kein zusätzliches Material zugeführt, sondern Material des Mantels, welches den Extrusionskopf bereits verlassen hat verwendet. Der Materialfluss der Extrusionsanlage wird hierbei nicht verändert. Stattdessen wird bereits aufgetragenes Material durch das Anstauen sozusagen umgelagert oder umgeschichtet. Durch das Anstauen wird im Bereich des angestauten Materials eine größere Wandstärke erzielt, als direkt nach dem Auftragen hinter dem Extrusionskopf. Das Formteil weist dann üblicherweise einen größeren Durchmesser auf, als ein Nenndurchmesser des Mantels direkt hinter dem Extrusionskopf, wobei der Nenndurchmesser durch die Mündungsöffnung des Extrusionskopfs gegeben ist.

Daher ist die Formeinheit zweckmäßigerweise in Förderrichtung vom Extrusionskopf beabstandet, sodass in einem Anstaubereich hinter dem Extrusionskopf und insbesondere vor und/oder innerhalb der Formeinheit das Material angestaut wird. Dabei wird das Material insbesondere über den Durchmesser der Mündungsöffnung des Extrusionskopfs hinaus angestaut, d.h. der Durchmesser des Formteils ist größer als der Nenndurchmesser, also größer als die Wandstärke des Mantels direkt nach dem Auftragen des Materials. Zwischen dem Extrusionskopf und der Formeinheit ist dann ein Abstand ausgebildet. Dieser beträgt vorzugsweise zwischen wenigen, d.h. etwa 1 bis 10 Zentimetern bis wenigen zehn, d.h. etwa 20 bis 50 cm. Alternativ ist der Abstand größer und beträgt zwischen 0,5 und 5 m. Der optimale Abstand ist insbesondere von der Aushärtezeit des Materials und der Fördergeschwindigkeit des Strangguts abhängig.

Ein wesentlicher mit der Erfindung erzielter Vorteil besteht insbesondere darin, dass durch Verwendung eines Teils des Materials des Mantels auf besonders einfache Weise ein Formteil am Stranggut herstellbar ist. Auf eine separate Anformung, welche üblicherweise einen zusätzlichen, häufig aufwendigen Verfahrensschritt darstellt wird vorteilhaft verzichtet. Stattdessen wird das Formteil vielmehr in einem Zuge mit dem Mantel hergestellt, indem das hinter der Extrusionseinheit noch formbare Material mittels der Formeinheit einem Umformprozess unterzogen wird. Zur Erstellung des Formteils wird somit auf vorteilhafte Weise lediglich das ohnehin schon am Stranggut vorhandene Material verwendet, sodass zweckmäßigerweise kein zusätzliches Material zugeführt werden muss und bevorzugt auch nicht zugeführt wird. Auch hierdurch ist die Herstellung des Strangguts deutlich vereinfacht.

Alternativ wird jedoch in der Formeinheit noch zusätzliches Material zugeführt, wodurch sich wenigstens ein Vorteil derart ergibt, dass aufgrund der Formbarkeit des Mantels sich das zugeführte Material optimal mit dem Material des Mantels verbindet und dadurch besonders fest und insbesondere stoffschlüssig mit dem Mantel verbunden wird.

Ein weiterer Vorteil besteht insbesondere darin, dass das Formteil aufgrund der einstückigen Ausbildung besonders dicht am Mantel befestigt ist. Dabei wird unter dicht insbesondere mediendicht, d.h. dicht bezüglich eines Eindringens von Gasen und/oder Flüssigkeiten verstanden. Anstatt das Formteil separat anzubringen und anschließend mit dem Mantel beispielsweise zu verschweißen, ist das nach dem erfindungsgemäßen Verfahren ausgebildete Formteil auf vorteilhafte Weise prinzipbedingt stoffschlüssig mit dem Mantel verbunden. Dies ergibt sich insbesondere auch daraus, dass für das Formteil vorteilhaft kein separates Material zugeführt werden muss, sondern zur Ausbildung des Formteils das schon vorhandene Material des Mantels umgeformt wird. Während des gesamten Verfahrens verbleibt das angestaute Material daher bevorzugterweise in ständiger Verbindung mit dem Mantel, wird also insbesondere nicht abgetrennt. Das Formteil ist somit vorzugsweise ständig ein Teil des Mantels und dadurch im Ergebnis auch besonders fest mit diesem verbunden. Hierdurch ist insbesondere auch die Zugfestigkeit der Anordnung aus Formteil und übrigem Mantel verbessert.

Um auf einfache Weise das Formteil aus dem Material des Mantels auszubilden, wird ein Teil dieses Materials mittels der Formeinheit angestaut, d.h. insbesondere aufgestaut oder festgehalten und generell relativ zur Seele insbesondere verschoben. Dazu wird die Formeinheit relativ zum Stranggut bewegt und derart positioniert, dass die Formeinheit für den sich dann ebenfalls relativ zu diesem bewegenden Mantel ein Hindernis bildet. Aufgrund der Formbarkeit des Materials weicht dieses gezwungenermaßen aus und wird auf diese Weise angestaut oder an der Formeinheit aufgeworfen. Mit fortschreitender Relativbewegung des Strangguts bezüglich der Formeinheit wird dann an dieser ein Teil des Materials des Mantels sozusagen gesammelt und zur Ausbildung des Formteils verwendet. In einer geeigneten Ausgestaltung wird die Formeinheit dazu in den Mantel eingefahren, sodass auf einem im Folgenden durch die Formeinheit geförderten Längsabschnitt ein Teil des Mantels abgestreift wird. Die Formeinheit ist dann insbesondere eine Abstreifeinheit, mittels der Material abgestreift oder abgeschabt wird, d.h. durch Abstreifen angestaut oder auch zurückgehalten wird.

Durch das Anstauen wird somit Material zur Ausbildung des Formteils bereitgestellt. Dem eigentlichen Mantel wird dadurch quasi Material entnommen, vorzugsweise ohne dieses jedoch vollständig abzutrennen, wodurch dann die Wandstärke des Mantels in Förderrichtung hinter der Formeinheit entsprechend reduziert wird oder der Mantel sogar vollständig entfernt wird. In dieser Hinsicht erfüllt die Formeinheit dann insbesondere eine Doppelfunktion derart, dass mittels der Formeinheit zum Einen das Formteil ausgebildet wird, zum Anderen aber auch die Wandstärke des verbleibenden Mantels definiert weitergebildet wird.

In welcher Weise das Material tatsächlich zurückgehalten wird, hängt insbesondere von der Eindringtiefe der Formeinheit in den Mantel ab sowie von der Haftung des Materials an der Seele. So ist es beispielsweise möglich, auch bei nicht vollständigem Eindringen in den Mantel dennoch sämtliches Material aufzuhalten, falls dieses entsprechenden Scherkräften wiedersteht und eine relativ dazu lediglich geringe Haftung bezüglich der Seele aufweist. Insbesondere in diesem Fall wird die Formeinheit vorzugsweise lediglich teilweise in den Mantel eingefahren und dadurch dennoch der Mantel auf einem bestimmten Längsabschnitt vollständig entfernt, wobei jedoch die Formeinheit nicht in Kontakt mit der Seele kommt und dadurch eine mögliche Beschädigung derselben durch die Formeinheit vorteilhaft vermieden wird. Hierbei wird vorzugsweise ein Material mit geeigneten Hafteigenschaften ausgewählt.

Besondere Vorteile ergeben sich in der genannten Ausgestaltung, bei welcher der Mantel auf einem Längsabschnitt des Strangguts vollständig entfernt wird, wodurch bereits im Herstellungsverfahren auf einfache Weise ein abisolierter Längsabschnitt ausgebildet wird, auf welchem die Seele dann insbesondere freiliegt. Daher wird ein solcher abisolierter Längsabschnitt auch als Freiabschnitt bezeichnet. Dieser braucht dann beispielsweise bei einer späteren Konfektionierung eines als Kabel ausgebildeten Strangguts nicht mehr in einem zusätzlichen Schritt abisoliert zu werden. In einer geeigneten Weiterbildung des wird das Stranggut weiterhin in dem abisolierten Längsabschnitt konfektioniert, d.h. insbesondere getrennt oder in mehrere Teile zerteilt. In einer Weiterbildung wird zumindest eines der Teile noch mit einem Anschlussteil versehen, z.B. einem Stecker, welches vorzugsweise nach Art eines hier beschriebenen Formteils hergestellt wird.

Insbesondere bei der Herstellung des Strangguts als Endlosware ergeben sich durch die abisolierten Längsabschnitte entlang des Strangguts entsprechend freigelegte Längsabschnitte. Bei einer Verwendung des Strangguts als Halbzeug entfällt dann vorteilhaft ein üblicherweise aufwendiges Abisolieren. Vorteilhaft ist allerdings auch ein Mantel, der auf einem Längsabschnitt lediglich reduziert ist, da hierbei die zum Abisolieren benötigten Kräfte zumindest geringer sind und zudem ein definierter Abrisspunkt oder -abschnitt ausgebildet ist.

Das angestaute Material wird nicht notwendigerweise vollständig zur Ausbildung des Formteils verwendet. Vielmehr wird in einer geeigneten Alternative lediglich ein Teil des angestauten Materials verwendet und der Rest beispielsweise abgetrennt und verworfen. Auf diese Weise ist die Gestaltung des Formteils besonders flexibel dahingehend, dass die Größe des Formteils nicht durch die Menge an angestautem Material vorgegeben sondern vielmehr frei wählbar ist. In einer geeigneten Variante wird dann dadurch als Formteil eine Verjüngung des Mantels oder in diesem eine Vertiefung oder ein Eindruck ausgebildet.

Die Formeinheit ist der Extrusionseinheit nachgeschaltet, d.h. in einem bestimmten Abstand hinter dieser angeordnet. Nach der Extrusionseinheit wird das Stranggut demnach zunächst über eine gewisse Strecke geführt, wobei das Material insbesondere abkühlt. In einer vorteilhaften Ausgestaltung wird daher der Abstand eingestellt und dadurch die Formbarkeit des Materials eingestellt. In einer ersten Variante wird dabei der Abstand derart eingestellt, dass das Material nach außen hin eine vergleichsweise feste Oberfläche nach Art einer Haut bildet, im Inneren dagegen im Vergleich dazu viskoser ist. Beim Anstauen in der Formeinheit bildet dann die Oberfläche eine definierte Begrenzung, hält also das Material zusammen und verhindert auf vorteilhafte Weise ein unkontrolliertes Ausbrechen oder Abreißen des angestauten Materials. In einer zweiten geeigneten Variante ist die Formeinheit dagegen unmittelbar hinter dem Extrusionskopf angeordnet. Der Abstand zwischen Formeinheit und Extrusionskopf ist dann auf ein Minimum reduziert und beträgt insbesondere null. Das Material weist dann beim Erreichen der Formeinheit eine besonders gute Formbarkeit auf und ist entsprechend besonders einfach zum Formteil umformbar.

In einer zweckmäßigen Weiterbildung ist die Formeinheit direkt mit dem Extrusionskopf verbunden oder in diesen integriert und bildet dann mit diesem eine Einheit, insbesondere einen erweiterten Extrusionskopf, der auch als Hybridformeinheit oder Hybridkopf bezeichnet wird. Aufgrund der Integration der beiden Funktionen Extrusionskopf und Formeinheit ist die Hybridformeinheit besonders kompakt. Die Hybridformeinheit weist einen Extrusionsabschnitt auf, mit einem Mundstück, durch welches die Seele gefördert wird und welchem das Material vom Extruder über Kanäle zugeführt wird, um das Material auf die Seele aufzutragen. An das Mundstück schließt sich dann ein Formabschnitt an, welcher die Formeinheit umfasst.

Besonders im Fall einer zusätzlichen Zuführung von Material in die Formeinheit ergibt sich ein weiterer Vorteil insbesondere dadurch, dass die Materialzuführung vom Extruder ausgehend deutlich vereinfacht ist. So wird beispielsweise ein Teil des Materials über eine Abzweigung von der Zuführung zum Mundstück hin zur Formeinheit abgezweigt. Die Zuführung von insbesondere schmelzflüssigem Material erfolgt vorzugsweise durch einen zusätzlichen Extruder, eine Schmelzpumpe oder ein ähnliches Gerät.

Um insbesondere lediglich auf einem vorgegebenen Längsabschnitt des Strangguts das Formteil auszubilden, wird in einer bevorzugten Ausgestaltung zum Anstauen des Materials die Formeinheit zunächst geschlossen und diese nach dem Ausbilden des Formteils wieder geöffnet. Auf diese Weise wird insbesondere lediglich im Anschluss an denjenigen Längsabschnitt des Strangguts, welcher in geschlossenem Zustand der Formeinheit zugeführt wird, ein Formteil aus dem dort angesammelten Material ausgebildet, während im geöffnetem Zustand das Stranggut im Wesentlichen unbeeinflusst von der Formeinheit ist. Unter Schließen der Formeinheit wird dann insbesondere verstanden, dass diese derart an das Stranggut herangeführt wird, dass ein Kontakt, beispielsweise im Sinne eines Eingreifens, mit dem Mantel hergestellt wird und dann entsprechend ein Anstauen des Materials an der Formeinheit erzielt wird. Unter Öffnen der Formeinheit wird dann insbesondere verstanden, dass diese entsprechend zurückgesetzt wird, sodass in diesem geöffneten Zustand keine Interaktion der Formeinheit mit dem Mantel des Strangguts erfolgt. Die Ausformung der Außenkontur des Strangguts erfolgt hierbei insbesondere hauptsächlich durch den Extrusionskopf, d.h. besonders in geöffnetem Zustand der Formeinheit, welche dann lediglich eine gewisse Menge an Material anstaut und beim Öffnen dann ein Formteil aus diesem angestautem Material freigibt.

Vorzugsweise werden mehrere Formteile an mehreren, periodisch wiederkehrenden Längenpositionen des Strangguts ausgebildet. Insbesondere in Kombination mit dem oben genannten Öffnen und Schließen der Formeinheit wird eine periodische Ausbildung mehrerer Formteile auf besonders einfache Weise durch periodisches Öffnen und Schließen der Formeinheit vorgenommen. In dieser Ausgestaltung eignet sich das Verfahren besonders zur Endlosherstellung eines Strangguts, mit an wiederkehrenden Längenpositionen am Mantel angebrachten Formteilen, beispielsweise regelmäßig angebrachten Halterungen für das Stranggut oder auch Längenmarkierungen.

In einer besonders einfachen Variante des Verfahrens wird das angestaute Material wie oben beschrieben mittels der Formeinheit zunächst lediglich aufgestaut und bildet dann insbesondere eine Verdickung des Mantels an der entsprechenden Längenposition. Um jedoch das Formteil besonders flexibel zu gestalten, wird in einer bevorzugten Weiterbildung des Verfahrens das angestaute Material in einer Formkammer der Formeinheit aufgenommen und in dieser Formkammer das Formteil ausgebildet. Die Formkammer der Formeinheit stellt somit eine entsprechende Kontur bereit, mittels welcher das angestaute Material in die zur Ausbildung des Formteils vorgesehene Form gebracht wird. Die Formeinheit ist in dieser Ausgestaltung somit maßgeblich an der Definition der Außenkontur des Strangguts beteiligt, besonders im Bereich des Formteils. Hierbei passt sich das angestaute Material insbesondere aufgrund von dessen Formbarkeit der von der Formkammer vorgegebenen Form an. Durch entsprechende Ausgestaltung der Formkammer sind dann nahezu beliebige Formteile am Mantel des Strangguts herstellbar. Bevorzugte Ausgestaltungen des Strangguts weisen dann eine Anzahl von Formteilen auf, welche durch geeignete Ausbildung der Formkammer als Gewinde, als Flansch, als Tülle, als Eindruck, als Konus, als eine Anzahl von Flügeln oder eine Kombination hiervon ausgebildet sind.

Die Formkammer ist insbesondere im Sinne eines Werkzeugs an der Formeinheit angebracht und in einer zweckmäßigen Variante auswechselbar, wodurch sich das aus dem Mantel ausgeformte Formteil je nach Anwendung des Strangguts auswählen lässt.

In einer geeigneten Weiterbildung wird das Formteil durch Ausfüllen der Formkammer mit angestautem Material ausgebildet. In dieser Ausführungsform wird das Formteil besonders definiert ausgebildet dahingehend, dass aufgrund des Ausfüllens der Formkammer jedes Mal ein Formteil mit entsprechend gleicher Kontur ausgebildet wird. Insbesondere im Falle einer wiederkehrenden Ausbildung mehrerer gleichartiger Formteile entlang des Strangguts ist auf diese Weise die Reproduzierbarkeit des Formteils sichergestellt. Die Formkammer wird dann vollständig mit angestautem Material ausgefüllt, sodass sich nach dem Öffnen der Formeinheit ein Formteil mit definierter und reproduzierbarer Außenkontur ergibt. Insbesondere ist ein solches Formteil dann ähnlich einem Spritzgussteil hergestellt, mit den sich daraus ergebenden Vorteilen.

Die Formkammer wird zweckmäßigerweise dadurch gebildet, dass mehrere Formnester der Formeinheit zusammen geführt werden. In dieser Ausgestaltung ist insbesondere das Öffnen und Schließen der Formeinheit dadurch realisiert, dass die mehreren Formnester zum Schließen zusammengeführt werden und dabei gemeinsam die Formkammer bilden und zum Öffnen die Formnester entsprechend wieder auseinander geführt werden, wodurch dann auch die Formkammer geöffnet wird und das ausgebildete Formteil freigibt. Bevorzugterweise sind die Formnester auswechselbar montiert.

In einer ersten geeigneten Variante werden zum Anstauen des Materials die Formnester vorzugsweise senkrecht zur Förderrichtung verschoben und bilden dann in zusammengeführtem Zustand die Formkammer. In einer beispielhaften und besonders einfachen Ausführungsform umfasst die Formkammer einen zylinderförmigen Hohlraum, welcher durch Zusammenführen zweier halbzylinderförmiger Formnester gebildet wird. Zweckmäßigerweise umfasst die Formkammer zumindest eine Durchführung, durch welche in geschlossenem Zustand zumindest die Seele oder ebendiese mit einem reduzierten Mantel aus dem verbleibenden, nicht angestauten Material geführt wird. Mit anderen Worten: vorzugsweise umfasst die Formeinheit eine Austrittsapertur, zur Förderung des Strangguts insbesondere auch in geschlossenem Zustand der Formeinheit. Beim Schließen der Formeinheit werden dann die Formnester an das Stranggut vorzugsweise senkrecht, alternativ in einem geeigneten Winkel herangeführt, sodass ein Eingriff in den Mantel erfolgt und das angestaute Material im Hohlraum gesammelt wird. Auf diese Weise wird dann an der entsprechenden Längsposition des Strangguts eine Verdickung ausgebildet. Durch entsprechende Profilierung der Mantelfläche des Hohlraums wird in einer vorteilhaften Weiterbildung dann auf besonders einfache Weise ein Gewinde ausgebildet.

In einer weiteren geeigneten, beispielhaften Ausgestaltung umfasst die Formeinheit lediglich eine Anzahl von sich insbesondere senkrecht zur Förderrichtung erstreckenden Wänden, deren Berandung einen Spalt bilden, durch welchen das Stranggut hindurch gefördert wird. Durch Einfahren der Wände in den Mantel des Strangguts, dass heißt durch Einstellen einer bestimmten Breite des Spalts, die geringer ist als ein Durchmesser des Strangguts hinter der Extrusionseinheit wird dann Material an diesen Wänden angestaut. Hierbei wirkt die Formeinheit dann insbesondere nach Art einer Abstreifeinheit, wobei das abgestreifte Material als angestautes Material an den Wänden der Formeinheit zur Ausbildung des Formteils angesammelt wird.

In einer zweiten geeigneten Variante sind die Formnester jeweils auf einem Drehelement montiert und werden durch Drehung zusammen und auseinander geführt. Mittels dieser Ausgestaltung erfolgt in besonders einfacher Weise eine periodische Ausbildung von Formnestern im Sinne einer kontinuierlichen Fertigung oder Endlosfertigung. Durch das Drehelement weisen die Formnester zudem je nach Drehsinn eine zusätzliche Geschwindigkeitskomponente in oder entgegen der Förderrichtung auf. Dadurch wird dann insbesondere die Relativgeschwindigkeit der Formnester relativ zum Stranggut eingestellt, sodass beispielsweise bei quasi mitlaufenden Formnestern auf vorteilhafte Weise auch die Produktionsgeschwindigkeit deutlich erhöht wird. Dem liegt die Erkenntnis zugrunde, dass das üblicherweise mechanische Ein- und Ausfahren, allgemein das Öffnen und Schließen der Formeinheit ein bestimmtes, minimales Maß an Zeit benötigt, in welcher unter Umständen bereits zu viel Material durch die noch so bewegte Formeinheit angestaut wird. Um dies zu vermeiden wird die Formeinheit daher zweckmäßigerweise mit dem Stranggut mitgeführt. Dieses Konzept wird bevorzugterweise auch unabhängig von an Drehelementen montierten Formnestern angewendet, beispielsweise bei einer quer zur Förderrichtung periodisch geöffneten und geschlossenen Formeinheit.

In einer zweckmäßigen Weiterbildung sind die Drehelemente zusätzlich insbesondere senkrecht zur Längsrichtung oder in einem Winkel dazu verschiebbar, d.h. wahlweise an das Stranggut heranführbar oder von diesem entfernbar. Da der Abstand zweier Formteile entlang des Strangguts bei Verwendung von Drehelementen von deren Umfangslänge abhängt, also von der Länge der Bahn, auf welcher die Formnester verfahren werden, ist bei entsprechend großen Abständen zunächst ein entsprechend großes Drehelement notwendig. Dieses Problem wird durch verschiebbare Drehelemente jedoch vorteilhaft umgangen, da solche Drehelemente dann lediglich nach Bedarf an das Stranggut herangefahren werden. Die Drehelemente dienen dann bei der Fertigung vorrangig insbesondere der Erhöhung der Produktionsgeschwindigkeit durch Mitführen der Formnester, wohingegen der Abstand zweier Formteile zueinander vorteilhaft durch den Zeitpunkt bestimmt wird, zu welchem die Drehelemente an das Stranggut herangefahren werden. Auf diese Weise sind Formteile in deutlich größeren Abständen entlang des Strangguts herstellbar, ohne ein übermäßig großes Drehelement verwenden zu müssen.

Geeignet ist zunächst sowohl eine Drehung des Drehelements um eine Drehachse, welche parallel oder senkrecht zur Förderrichtung verläuft. Das am Drehelement angebrachte Formnest wird entsprechend um die Drehachse herum verfahren. Dabei entspricht aber ersterer Fall einem Verschieben des Formnestes senkrecht zur Förderrichtung in oben bereits beschriebenem Sinne. Daher wird unter einem an einem Drehelement angebrachten Formnest hier insbesondere verstanden, dass das Drehelement um eine Drehachse drehbar ist, welche senkrecht zur Längsrichtung des Strangguts verläuft, sodass also das Formnest in Förderrichtung oder entgegen dieser an das Stranggut heranführbar ist.

Ein jeweiliges Formnest ist auf einem Drehelement, beispielsweise einem Drehkreis, einer Rolle oder an einer Kette derart montiert, dass durch Drehung des Drehelements oder Förderung desselben das Formnest auf einer bestimmten Bahn, insbesondere Umfangsbahn bewegt wird, die beispielsweise eine Kreisbahn ist. Alternativ ist aber auch ein exzentrisches, elliptisches oder anders ausgebildetes Drehelement geeignet, sodass das zugehörige Formnest entlang einer entsprechenden Bahn verfahren wird. Durch insbesondere kontinuierliche Drehung wird dann das Formnest jeweils wiederkehrend an das Stranggut herangefahren und durch Zusammenführen der mehreren Formnester dann die Formkammer gebildet. Dabei ist es prinzipiell denkbar, in einer geeigneten Variante mehrere insbesondere auch unterschiedliche Formnester an einem jeweiligen Drehelement zu montieren, sodass entweder mittels einer einzigen Formeinheit verschiedene Formteile je nach Bedarf am Stranggut ausgebildet werden oder alternativ mehrere verschiedene Formteile in Längsrichtung hintereinander ausgebildet werden.

Im Zusammenhang mit den oben genannten drehbaren Formnestern wird deren zur Ausbildung des Formteils verwendete Kontur zweckmäßigerweise an den gerade nicht geradlinigen Verfahrweg des Formnestes angepasst, sodass also ein jeweiliges Formnest vorzugsweise eine gebogene Außenkontur aufweist. Mit anderen Worten: Das Formnest wird an die Umfangsbahn des Drehelementes angepasst, wodurch dann beim Abrollen des Formnestes am Stranggut ein entsprechend langes Formteil mit definierter, beispielsweise geradliniger Kontur ausgebildet wird.

In einer zweckmäßigen Variante sind die Formnester jeweils mittels eines Verschiebeelements angebracht, d.h. insbesondere gelagert oder aufgehängt. Das Verschiebeelement ermöglicht ein Verschieben und/oder Drehen des Formnests insbesondere beim Zusammenführen und allgemein in zusammengeführtem Zustand der Formnester und erlaubt dadurch ein gewisses Maß an Toleranz beim Öffnen und Schließen der Formkammer. Als Verschiebeelemente eignen sich beispielsweise jegliche Federelemente, Hydraulikelemente, Schienen oder Linearlager. Die Verschiebeelemente sind dann derart ausgebildet, dass die Formnester entweder beim Zusammenführen automatisch nachgeben oder mittels einer aktiven Ansteuerung verfahren wehren. Besonders in letzterem Fall sind auch Linearmotoren oder ähnliche Aktuatoren als Verschiebeelemente geeignet. Wesentliches Merkmal aller geeigneten Verschiebeelemente ist insbesondere, dass diese eine Variation derjenigen Bahn zulassen, entlang welcher ein jeweiliges Formnest verfahren wird.

Besonders vorteilhaft ist diese Variante in Kombination mit an Drehelementen befestigten Formnestern, da hierbei dann trotz der prinzipiell gebogenen Bahn, entlang derer die Formnester verfahren werden, beim Zusammenführen eine zumindest abschnittsweise gerade Führung erfolgt. Beispielsweise werden zwei Formnester zu einer Formkammer zusammengeführt und gegeneinandergedrückt, sodass die Formnestes jeweils in etwa in Richtung zur Drehachse des jeweiligen Drehelements hin verschoben werden. Die Bahn weicht dann von der Kreisbahn des jeweiligen Drehelements ab und weist dann einen Abschnitt nach Art einer Kreissehne auf. Die Formnester fahren somit quasi mit dem Stranggut mit, wobei jedoch weiterhin insgesamt eine Relativbewegung in oder entgegen der Förderrichtung stattfindet. Durch dieses Mitfahren wird jedoch zweckmäßigerweise die Relativgeschwindigkeit von Formkammer zu Stranggut eingestellt und insbesondere reduziert, sodass entsprechend höhere Produktionsgeschwindigkeiten möglich sind, bei gleicher Menge an pro Zeit angestautem Material. Besonders bei hohen Produktionsgeschwindigkeiten lassen sich auf diese Weise auch Formteile mit lediglich geringer Abmessung von beispielsweise etwa dem doppelten Durchmesser des Strangguts noch gut ausbilden.

In einer besonders geeigneten Ausgestaltung werden die Formnester jeweils entlang einer vorzugsweise geschlossenen Bahn verfahren, welche zumindest abschnittsweise parallel zur Förderrichtung verläuft. Die Bahn weist dann einen geraden Abschnitt auf, der parallel zur Förderrichtung verläuft, wodurch die Formnester entsprechend abschnittsweise parallel zum Stranggut geführt werden und somit auch bei besonders hohen Fördergeschwindigkeiten eine nahezu beliebige Relativgeschwindigkeit zwischen Formeinheit und Stranggut bei gleichzeitig optimal geschlossener Formkammer realisiert ist.

Ein jeweiliges Formnest wird vorzugsweise mittels eines Förderriemens, -bands, - seils oder einer Kette und insbesondere nach Art eines Raupenantriebs, entlang der Bahn verfahren. Dabei sind prinzipiell nahezu beliebige Bahnen realisierbar. Wesentlich ist allerdings, dass ein Teilabschnitt der Bahn als gerader Abschnitt parallel zur Förderrichtung verläuft. Dabei wird unter parallel verlaufen insbesondere verstanden, dass ein jeweiliges Formnest in oder entgegen oder wahlweise in oder entgegen der Förderrichtung verfahren wird.

Bei dem Verfahren wird die Ausbildung des Formteils durch Umformung des Mantels im Wesentlichen insbesondere durch eine Relativbewegung der Formeinheit bezüglich des Strangguts erzielt. In einer besonders einfachen Ausgestaltung ist dazu die Formeinheit zweckmäßigerweise zunächst unbeweglich insbesondere bezüglich der Extrusionseinheit angeordnet oder weist eine im Vergleich zur Fördergeschwindigkeit geringere Geschwindigkeit in Förderrichtung auf, sodass dann bei Förderung des Strangguts durch die Formeinheit diese relativ zum Stranggut entgegen der Förderrichtung bewegt wird. Auf diese Weise wird dann in Förderrichtung vor der Formeinheit das Material angestaut sodass insbesondere ein bezüglich des Strangguts frontseitiges Formteil ausgebildet wird.

In einer vorteilhaften Variante wird dagegen beim Anstauen des Materials die Formeinheit in Förderrichtung mit einer vorgegebenen Geschwindigkeit bewegt, die größer ist als eine Fördergeschwindigkeit des Strangguts. Auf diese Weise wird dann entsprechend mittels der Formeinheit Material in Förderrichtung hinter der Formeinheit angestaut, wodurch dann wiederum ein bezüglich des Strangguts rückseitiges Formteil ausgebildet wird. Insbesondere lässt sich durch Kombination dieser beiden unterschiedlichen Relativbewegungen ein nach der Herstellung abgelängtes Stranggut in besonders vorteilhafter Weise sowohl mit einem frontseitig als auch mit einem rückseitig angeordneten Formteil, beispielsweise mit zwei endseitig am Stranggut angeordneten Steckergehäusen oder Tüllen ausbilden. Bevorzugterweise wird zwischen zwei in Förderrichtung aufeinanderfolgenden Längenpositionen ein regulärer Stranggutabschnitt ausgebildet, der frei von Formteilen ist und dabei insbesondere unbeeinflusst von der Formeinheit durch diese hindurch oder an dieser vorbei geführt wird. Auf diesem regulären Stranggutabschnitt weist dann das Stranggut einen Mantel mit einer entsprechend regulären Wandstärke auf. Dabei weist der reguläre Stranggutabschnitt vorzugsweise eine Länge auf, die deutlich größer ist als die Länge eines Formteilabschnitts, auf dem ein Formteil angeordnet ist. Ein jeweiliger Formteilabschnitt weist beispielsweise eine Länge im Bereich weniger Millimeter bis hin zu wenigen Metern auf. Der reguläre Stranggutabschnitt weist beispielsweise eine Länge im Bereich einiger Zentimeter bis zu mehreren zehn Metern auf. Prinzipiell ist für das Längenverhältnis daher ein besonders großer Wertebereich denkbar. Beispielsweise ist der reguläre Stranggutabschnitt zwischen zwei Formteilen bis zu etwa fünftausendmal oder bis zu etwa zehnmal so lang wie die sich jeweils an den Stranggutabschnitt anschließenden Formteilabschnitte. In einer möglichen Variante ist der Formteilabschnitt etwa 5mm lang und der reguläre Stranggutabschnitt etwa 25m. Insbesondere ist der Formteilabschnitt lediglich endseitig, entweder an einem Ende oder an beiden Enden des Strangguts ausgebildet. Die Formteile bilden in dieser bevorzugten Variante daher Endstücke z.B. eines Kabel oder auch eines Schlauches aus.

In einer zweckmäßigen Weiterbildung werden zumindest zwei Formnester entlang des gleichen geraden Abschnitts und insbesondere entlang der gleichen Bahn verfahren und die zumindest zwei Formnester weisen einen einstellbaren Formnestabstand auf, insbesondere entlang der Bahn gemessen. Dadurch lassen sich auf besonders einfache Weise am Stranggut zwei aufeinanderfolgende Formteile mit definiertem Abstand, nämlich dem Formnestabstand, herstellen.

In einer besonders bevorzugten Weiterbildung wird der Formnestabstand beim Verfahren der zumindest zwei Formnester entlang des geraden Abschnitts insbesondere kontinuierlich verändert, wodurch vorteilhafterweise insbesondere gleichzeitig ein vorderseitiges und ein rückseitiges Formteil am Stranggut ausgebildet werden. Dabei gehören die zumindest zwei Formnester jeweils einer von zwei Formkammern an, die jeweils mit einem weiteren Formnest gebildet werden, welche entlang einer geeigneten, zweiten Bahn verfahren werden. Beim Schließen mit einem Formnestabstand von vorzugsweise null, werden dann zwei Formkammern geschlossen, welche im Folgenden durch Vergrößerung, allgemein Veränderung, des Formnestabstands in Förderrichtung quasi auseinandergezogen werden. Dadurch werden dann vorzugsweise zwei entsprechend voneinander beabstandete Formteile ausgebildet. In einer Weiterbildung wird zwischen diesen beiden Formteilen geeigneterweise ein freiliegender Längsabschnitt ausgebildet, an welchem eine Konfektionierung des Strangguts erfolgen kann oder zweckmäßigerweise erfolgt.

In einer bevorzugten Weiterbildung wird die Formbarkeit des angestauten Materials dadurch verbessert, dass die Formeinheit, insbesondere die Formkammer, beim Anstauen temperiert wird, d.h. insbesondere beheizt oder gekühlt. Zweckmäßigerweise werden die jeweiligen Formnester, welche die Formkammer bilden und mit denen das angestaute Material in Kontakt steht temperiert. Eine Temperierung erfolgt beispielsweise derart, dass die Formkammer auf eine ähnliche Temperatur wie der Extrusionskopf hochgeheizt wird oder alternativ heruntergekühlt wird. Dadurch weist dann das angestaute Material eine zur Umformung besonders geeignete Viskosität auf. Die Temperierung auf eine bestimmte Temperatur ist dabei unter Anderem insbesondere von dem Material des Mantels und/oder den gewünschten Formungseigenschaften, wie z.B. Viskosität, abhängig.

Um die Form und die Kontur des mittels der Formeinheit ausgebildeten Formteils beim und nach dem Öffnen der Formkammer besonders akkurat zu erhalten, wird die Formkammer insbesondere nach dem Anstauen und vor dem Öffnen bevorzugterweise temperiert, insbesondere gekühlt. Dabei erstarrt dann das zum Formteil umgeformte angestaute Material und verbleibt entsprechend in der vorgesehenen Form.

Die Aufgabe wird weiterhin gelöst durch ein Stranggut welches als solches nicht beansprucht wird. Das insbesondere mit dem zuvor beschriebenen Verfahren hergestellte Stranggut zeichnet sich dadurch aus, dass es einen aus dem Mantel, also aus dem für den Mantel verwendeten Material, ausgeformtes Formteil aufweist.

Da für das Formteil Mantelmaterial verwendet ist, weist der Mantel daher vorzugsweise benachbart zum Formteil eine andere Ausgestaltung, insbesondere eine veränderte, speziell eine verringerte Wandstärke auf, als in weiter entfernten Normalabschnitten des Mantels. Unter benachbart wird hierbei der sich unmittelbar an das Formteil in Längsrichtung anschließender Mantelabschnitt verstanden. Unter Normalabschnitte werden solche Mantelabschnitte verstanden, deren Geometrie unverändert und durch das Extrusionswerkzeug, insbesondere eine Düse, vorgegeben ist, bei denen also kein Materialabtrag erfolgte. Die Länge des benachbarten Bereichs ist dabei dadurch bestimmt, dass das abgetragene Mantelvolumen dem Volumen des aus dem Mantelmaterial ausgebildeten Formteils entspricht. Das Stranggut weist in den Normalabschnitten dabei üblicherweise einen Nenndurchmesser auf, wohingegen die direkt benachbarten Mantelabschnitte einen im Vergleich zum Nenndurchmesser geringeren Durchmesser aufweisen.

Bei dem entsprechenden Stranggut ist das Formteil besonders fest und insbesondere stoffschlüssig mit dem Mantel verbunden. Im Gegensatz zu einem angegossenen oder angespritzten Formteil ergibt sich der besondere Vorteil, dass das Material des Formteils nicht auf den relativ dazu kalten Mantel aufgebracht wird, sondern bei der Herstellung aus der noch formbaren Masse geformt wird. Dadurch ist zwischen Formteil und Mantel dann keine Grenzschicht vorhanden, vielmehr sind der Mantel und das Formteil einstückig ausgebildet. Bei einem angegossenen oder angespritzten Formteil ergibt sich jedoch notwendigerweise ein höchstens unvollständiger Stoffschluss und eine entsprechende Grenzschicht zwischen Formteil und Mantel. Ein vollständiges Aufschmelzen des Mantels zwecks vollständigem Stoffschluss ist beim Angießen oder -spritzen zwar grundsätzlich möglich, gefährdet aber die Seele des Strangguts, die entsprechend ebenfalls thermisch beeinflusst und dann möglicherweise beschädigt würde. Besonders beim Umspritzen treten insbesondere zusätzlich zur thermischen Belastung häufig auch mechanische Belastungen auf, die unter Umständen zu einer Beschädigung führen, beispielsweise über den üblicherweise vorliegenden Nachdruck. Bei dem hier beschriebenen Stranggut ist jedoch ein insbesondere vollständiger Stoffschluss bei unbeeinflusster, d.h. voll intakter Seele realisiert.

Aufgrund der Verwendung der Formeinheit lassen sich allgemein auch komplexe Geometrien ausbilden. Allgemein weist das Formteil in Längsrichtung und/oder quer zur Längsrichtung insbesondere einen Querschnitt auf, der sich vom Querschnitt des Strangguts unterscheidet, insbesondere ist hierbei auf dem Formteilabschnitt die Wandstärke gegenüber derjenigen auf einem regulären Stranggutabschnitt verändert. Grundsätzlich sind Formteile mit beliebigen Ausmaßen, d.h. Wandstärken denkbar. Bevorzugt weist ein Formteil, bei dem insbesondere kein Material verworfen wurde, jedoch quer zur Längsrichtung eine maximale Abmessung auf, die größer ist als die Wandstärke des Strangguts auf einem regulären Stranggutabschnitt, d.h. auf einem Abschnitt ohne Formteil. Mit anderen Worten: das Formteil weist vorzugsweise eine Wandstärke auf, die ein Vielfaches der Wandstärke des Strangguts ohne Formteil beträgt und beispielsweise um bis zu einen Faktor 20 größer ist.

Das Formteil weist in einer ersten Variante vorzugsweise ein Gewinde auf. Zweckdienlicherweise ist dieses umlaufend um den Mantel ausgebildet. Auf den Mantel kann daher ein Gegenstück aufgeschraubt werden.

In weiteren Alternativen ist das Formteil als ein Flansch, eine Tülle ausgebildet oder weist zumindest solche Elemente auf. Weiterhin umfasst in bevorzugten Ausgestaltungen das Formteil eine Konus, eine Anzahl von beispielsweise am Außenumfang insbesondere gleichmäßig verteilt angebrachte Stege oder Flüge oder auch einen oder mehrere Eindrücke nach Art von muldenartigen Vertiefungen. Komplementär hierzu sind alternativ Erhebungen am Mantelumfang ausgebildet.

In einer bevorzugten Ausgestaltung ist das Stranggut ein Kabel und dessen Seele eine Kabelseele, welche zumindest einen Leiter aufweist und in geeigneten Varianten zumindest eine Ader, eine Leitung, ein Teilkabel oder eine Kombination hiervon. Zusätzlich weist die Kabelseele in einer geeigneten Weiterbildung eine Schirmung, Ummantelung oder Bandierung auf. Auf die Kabelseele ist dann ein Mantel aufextrudiert entlang dessen eine Anzahl von Formteilen direkt aus dem Mantel ausgebildet sind.

In einer bevorzugten Variante ist das Stranggut ein Schlauch, insbesondere Schlauchpaket, mit einer Schlauchseele, welche einen Hohlraum einschließt. Der Hohlraum dient insbesondere der Durchführung eines oder mehrerer Kabel, Leitungen oder Medienschläuche oder dient direkt der Förderung eines Mediums.

Schließlich wird die Aufgabe erfindungsgemäß weiterhin durch eine Verwendung einer Vorrichtung mit den Merkmalen des Anspruchs 15 gelöst. Diese umfasst hierzu eine Extrusionseinheit sowie eine diesem in Längsrichtung nachgeschaltete Formeinheit.

Die Formeinheit ist hierbei insbesondere an einem Träger angeordnet, mit dessen Hilfe sie wiederkehrend, insbesondere periodisch wiederkehrend an den Mantel verfahrbar ist, zur Ausbildung von periodisch wiederkehrenden Formteilen.

In einer bevorzugten Ausgestaltung sind die Formeinheit und zumindest ein Extrusionskopf der Extrusionseinheit zu einer Hybridformeinheit kombiniert.

Die Vorrichtung umfasst weiterhin eine Steuereinheit zur Ansteuerung des Trägers und / oder der Formeinheit. Die Steuereinheit ist dabei insbesondere derart ausgebildet, dass ein mit einer Extrusionsgeschwindigkeit definiert gekoppeltes Verfahren der Formeinheit an den Mantel gewährleistet ist.

Die Formeinheit kann dabei als Nachrüstteil für bestehende Extrusionseinheiten oder -anlagen eingesetzt werden. Die Formeinheit an sich wird ebenfalls - auch unabhängig von der Extrusionseinheit - als eigenständig offenbart (jedoch nicht beansprucht).

Nachfolgend werden Ausführungsbeispiele der Erfindung anhand einer Zeichnung näher erläutert. Darin zeigen jeweils schematisch:
- Fig. 1: ein Stranggut, welches durch eine Extrusionseinheit und eine Formeinheit zur Ausbildung von Formteilen hindurchgeführt wird,
- Fig. 2a: eine erste Variante der Formeinheit zur Ausbildung von frontseitigen Formteilen am Stranggut,
- Fig. 2b: die Verwendung der Formeinheit gemäß Fig. 2a zur Ausbildung von rückseitigen Formteilen,
- Fig. 3: eine Vorderansicht der Formeinheit gemäß Fig. 2a und des Strangguts,
- Fig. 4a: eine zweite Variante der Formeinheit,
- Fig. 4b: eine Hybridformeinheit,
- Fig. 5: ausschnittsweise ein Stranggut mit Formteilen,
- Fig. 6: eine dritte Variante der Formeinheit,
- Fig. 7a - 7c: jeweils einen Verfahrensschritt bei der Verwendung einer vierten Variante der Formeinheit,
- Fig. 7d: ein Drehelement mit Formnestern einer fünfte Variante der Formeinheit,
- Fig. 7e - 7g: die Verfahrensschritte gemäß den Fig. 7a - 7c mit einer sechsten Variante der Formeinheit,
- Fig. 8a: eine siebte Variante der Formeinheit,
- Fig. 8b - 8d: jeweils einen Verfahrensschritt bei der Verwendung einer achten Variante der Formeinheit,
- Fig. 9a - 9f: jeweils eine Variante des Strangguts als Kabel mit einem Formteil, und
- Fig. 10: eine Variante des Strangguts als Schlauch mit einem Formteil.

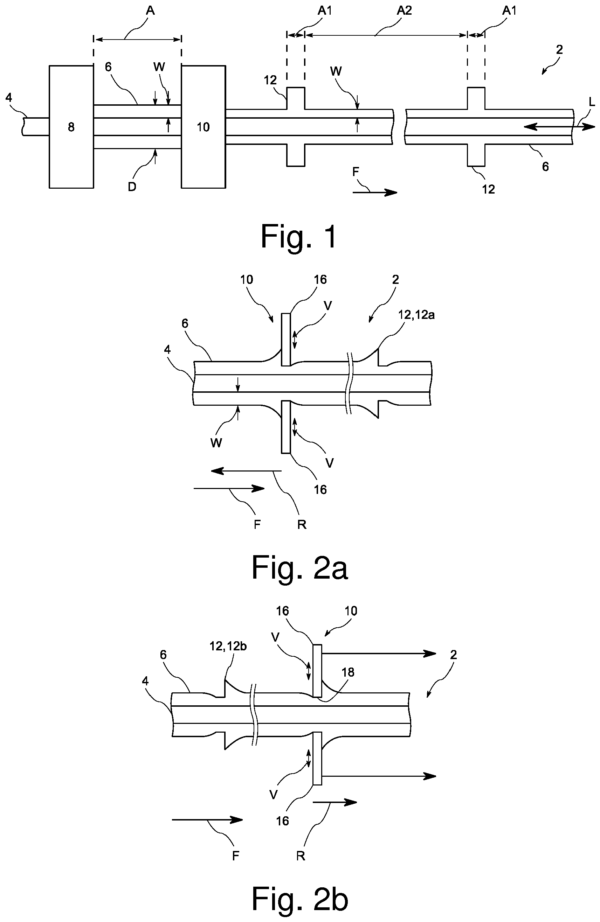

Die grundlegenden Schritte des erfindungsgemäßen Verfahrens zur Herstellung eines Strangguts 2 werden zunächst anhand der Fig. 1 erläutert. Diese zeigt im Längsschnitt das sich in einer Längsrichtung L erstreckende Stranggut 2, welches eine innenliegende Seele 4 und einen auf diese aufgebrachten Mantel 6 umfasst. Das Stranggut 2 ist hier als Kabel ausgebildet, mit einer Seele, die entsprechend eine Kabelseele ist und beispielsweise einen oder mehrere Leiter, Adern, Leitungen und/oder Teilkabel aufweist. Alternativ ist das Stranggut 2 ein Schlauch und die Seele 4 dann entsprechend eine Schlauchseele. In dem hier gezeigten Ausführungsbeispiel ist der Mantel 6 insbesondere ein Außenmantel des Strangguts 2, in einer alternativen Ausgestaltung des Verfahrens wird das Stranggut 2 jedoch noch weiter verarbeitet, wird also als Halbzeug hergestellt. Zum Aufbringen des Mantels 6 wird die Seele 4 zunächst in einer Förderrichtung F einer Extrusionseinheit 8 zugeführt. Mittels dieser wird ein vorgegebenes Material, beispielsweise ein Kunststoff, als Mantel 6 auf die Seele 4 aufextrudiert.

In Förderrichtung F ist der Extrusionseinheit 8 eine Formeinheit 10 nachgeschaltet, welcher das Stranggut 2 zugeführt wird. Dabei sind insbesondere die Fördergeschwindigkeit, das heißt hier insbesondere die Extrusionsgeschwindigkeit, und der Abstand A der Formeinheit 10 zur Extrusionseinheit 8 derart gewählt, dass das Material des Mantels 6 noch formbar ist, wenn dieses die Formeinheit 10 erreicht. Mittels dieser Formeinheit 10 wird dann ein Teil des Materials des Mantels 6 angestaut und zur Ausbildung eines Formteils 12 verwendet. Dabei wird das Formteil 12 direkt aus dem Mantel 6 des Strangguts 2 ausgeformt.

In Fig. 1 ist exemplarisch ein als zylinderförmige Verdickung des Mantels 6 ausgeführtes Formteil 12 gezeigt. Dieses ist zudem lediglich auf einem bestimmten Formteilabschnitt A1 des Strangguts 2 ausgebildet, an welchen sich Stranggutabschnitte A2 mit im Wesentlichen gleichmäßiger Wandstärke W des Mantels 6 anschließen. In dem hier gezeigten Ausführungsbeispiel sind zudem mehrere Formteile 12 an periodisch wiederkehrenden Längenpositionen ausgebildet, sodass sich zwischen zwei in Längsrichtung L aufeinanderfolgenden Formteilen 12 ein von der Formeinheit 10 insbesondere unbeeinflusster Stranggutabschnitt A2 mit einer bestimmten Länge erstreckt.

Ein wesentlicher Schritt des erfindungsgemäßen Verfahrens ist das Anstauen von Material des Mantels 6 mittels der Formeinheit 10. Dieser Vorgang ist exemplarisch anhang in einer ersten Variante der Formeinheit 10 in Fig. 2a in einer Längsschnittansicht dargestellt. Die Formeinheit 10 umfasst dabei zwei in einer Verschieberichtung V verschiebbare Wände 16, die eine spaltförmige Apertur 18 mit einstellbarer Breite B ausbilden. Das Stranggut 2 und dessen aufextrudierter, noch formbarer Mantel 6 werden nun der Formeinheit 10 derart zugeführt, dass das Stranggut 2 durch die Apertur 18 geleitet wird. Ist die Breite B der Apertur 18 nun geringer, als der Durchmesser D des Strangguts 2, dann wird ein Teil des Materials des Mantels 6 an den Wänden 16 aufgefangen und dort an- oder auch aufgestaut.

Durch Verschieben der Wände 16 in Verschieberichtung V wird dann festgelegt, ob ein Anstauen erfolgt oder nicht. Zum Anstauen von Material werden dann die Wände 16 derart zusammengeführt, dass diese in den Mantel 6 eingreifen und somit ein Hindernis für das mit dem Stranggut 2 in Förderrichtung F geförderte Material bilden. In Fig. 2a ergibt sich aufgrund der Fördergeschwindigkeit des Strangguts 2 und der hier bezüglich der Extrusionseinheit 8 fixen Position der Formeinheit 10 eine Relativbewegung R der Formeinheit 10 bezüglich des Strangguts 2 entgegen der Förderrichtung F. Dadurch wird in Förderrichtung F vor den Wänden 16 Material angestaut, wodurch insbesondere ein frontseitiges Formteil 12a ausgebildet wird. In einer nicht gezeigten Variante erfolgt zusätzlich eine Bewegung der Formeinheit 10 entgegen der Förderrichtung F, wodurch die Relativbewegung R entsprechend verstärkt wird. In einer anderen Alternative erfolgt eine zusätzliche Bewegung in Förderrichtung F, jedoch mit geringerer Geschwindigkeit als die Fördergeschwindigkeit, sodass weiterhin ein frontseitiges Formteil 12a ausgebildet wird, jedoch vergleichsweise langsam. Dies ist besonders bei hohen Fördergeschwindigkeiten von Vorteil und insbesondere wenn lediglich wenig Material aufgestaut werden soll.

In Fig. 2a ist die Formeinheit 10 in einem geschlossenen Zustand dargestellt, um entsprechend Material anzustauen. Ist das Formteil 12 fertig ausgebildet, so wird die Formeinheit 10 geöffnet, das heißt in einen offenen Zustand überführt, und dadurch das Formteil 12 freigegeben. In dem in Fig. 2a gezeigten Ausführungsbeispiel werden dazu die Wände 16 vom Stranggut 2 in Verschieberichtung V weggefahren, sodass kein Eingriff mehr in den Mantel 6 stattfindet und das entsprechend aufgestaute Material als Formteil 12, genauer als frontseitiges Formteil 12a, auch Frontteil genannt, in Förderrichtung F aus der Formeinheit 10 automatisch herausgefördert wird.

Eine alternative Verwendung der Formeinheit 10 gemäß Fig. 2a ist in Fig. 2b gezeigt. Dort wird die Formeinheit 10 zusätzlich in Förderrichtung F bewegt und zwar mit einer Geschwindigkeit, die größer ist als die Fördergeschwindigkeit des Strangguts 2. Dadurch ergibt sich eine Relativbewegung R der Formeinheit 10 bezüglich des Strangguts 2 in Förderrichtung F, wodurch entsprechend hinter der Formeinheit 10 Material des Mantels 6 aufgeschoben wird, um das Formteil 12 als ein rückseitiges Formteil 12b auszubilden.

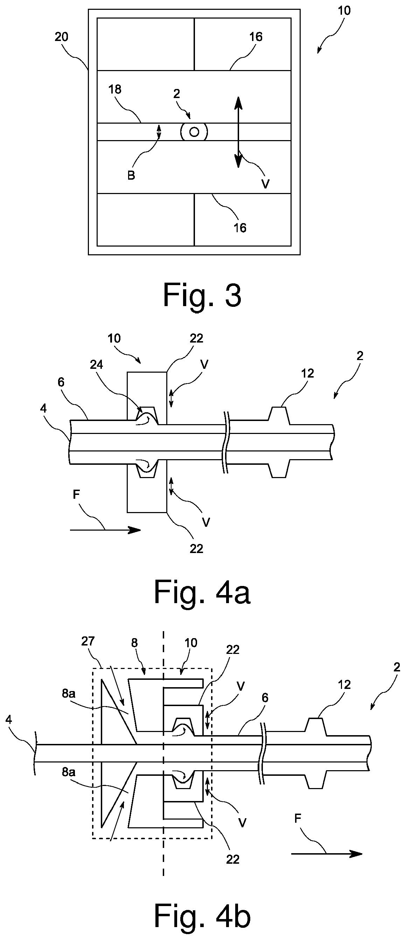

Fig. 3 zeigt die Formeinheit 10 aus den Fig. 2a und 2b in einer Vorderansicht. Dabei sind die Wände 16 jeweils verschiebbar in einem Rahmen 20 gehaltert, sodass sich die spaltförmige Apertur 18 ergibt. Deutlich erkennbar ist auch, dass in dem hier dargestellten geschlossenen Zustand der Formeinheit 10 der Spalt zumindest in der Verschieberichtung V eine Breite B aufweist, welche geringer ist als der Durchmesser D des Strangguts 2 vor der Formeinheit 10 mit noch nicht umgeformtem Mantel 6.

Die Fig. 3 zeigt lediglich eine besonders einfache Ausgestaltung aus einer Vielzahl von denkbaren und geeigneten, hier jedoch nicht gezeigten Ausgestaltungen der Formeinheit 10. Beispielsweise wird alternativ eine Formeinheit 10 verwendet, bei der die jeweils dem Stranggut 2 zugewandte Kante der jeweiligen Wand 16 nicht wie hier gerade ausgeführt ist, sondern beispielsweise derart, dass sich eine kreisrunde oder sonstwie geformte Apertur 18 ergibt.

In Fig. 4a ist eine zweite Variante der Formeinheit 10 dargestellt, bei der diese mehrere, hier zwei Formnester 22 umfasst, welche ähnlich wie in den Fig. 2a und 2b in einer Verschieberichtung V insbesondere senkrecht zur Förderrichtung F verschoben werden. Durch Zusammenführen der beiden Formnester 22 wird dann die Formeinheit 10 geschlossen und eine Formkammer 24 ausgebildet, in welcher das angestaute Material bei fortgesetzter Förderung des Strangguts 2 durch die Formeinheit 10 gesammelt wird. In dem hier gezeigten Ausführungsbeispiel wird dann die Formeinheit 10 solange geschlossen gehalten, bis die Formkammer 24 vollständig mit angestautem Material des Mantels 6 ausgefüllt ist und dann geöffnet, sodass ein Formteil 12 mit einer definierten Kontur entsprechend der Vorgabe der Formkammer 24 ausgebildet wird. Alternativ wird die Formeinheit 10 bereits zurückgefahren, bevor die Formkammer 24 vollständig mit Material ausgefüllt wurde.

Aus Fig. 4a und auch den Fig. 2a und 2b wird deutlich, dass zur Ausbildung des Formteils 12 das Material des Mantels 6 lediglich umgeformt wird und das angestaute Material mit dem von der Formeinheit 10 nicht beeinflussten, restlichen Material ständig in Verbindung bleibt. Dadurch ist ein besonders guter Stoffschluss zwischen dem Formteil 12 und dem übrigen Teil des Mantels 6 gewährleistet.

Fig. 4b zeigt die Formeinheit 10 aus Fig. 4a, wobei hier der Abstand A zwischen Extrusionseinheit 8 und Formeinheit 10 null ist, sodass die Extrusionseinheit 8 und die Formeinheit 10 zu einer Hybridformeinheit 27 zusammengefasst sind. Mit anderen Worten: die Formeinheit 10 ist in die Extrusionseinheit 8 quasi integriert.

Das Stranggut 2 wird dann zunächst einem Extrusionskopf der Extrusionseinheit 8 zugeführt und dort über Kanäle 8a mit dem Material zur Ausbildung des Mantels 6 versehen. Das Stranggut 2 gelangt dann unmittelbar in die Formeinheit 10, in welcher periodisch entsprechende Formteile 12 ausgebildet werden, wobei das Material aufgrund des verschwindenden Abstands A auf vorteilhafte Weise eine maximale Formbarkeit aufweist. In einer nicht gezeigten Alternative sind die Kanäle 8a auch mit der Formkammer 24 der Formeinheit 10 verbunden, um beim Umformen weiteres Material zuzuführen oder alternativ abzuführen.

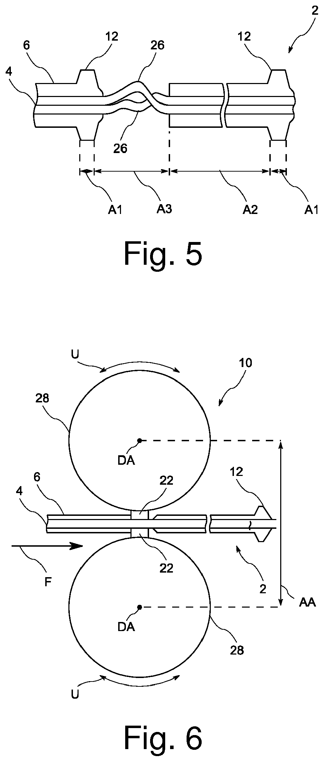

Ein exemplarisches Stranggut 2 ist in Fig. 5 ausschnittsweise und in einer Längsschnittansicht dargestellt. Das hier gezeigte Stranggut 2 umfasst dabei mehrere Formteilabschnitte A1 mit jeweils einem Formteil 12, das hier als frontseitiges Formteil 12a hergestellt wurde, sowie sich an ein jeweiliges Formteil 12 anschließende Stranggutabschnitte A2, mit regulär ausgeführtem Mantel 6. Desweiteren wurde frontseitig der Formteile 12 der Mantel 6 vollständig entfernt indem das entsprechende Material mittels der Formeinheit 10 angestaut und zum Formteil 12 umgeformt wurde. Dadurch kommt hier auf einem mantellosen Freiabschnitt A3 die Seele 4 zum Vorschein, die hier insbesondere zwei Adern 26 umfasst. An diesen Freiabschnitten A3 wird das zunächst als Endlosware gefertigte Stranggut 2 vorzugsweise und besonders einfach abgelängt und in mehrere Stranggutstücke zerteilt.

In Fig. 6 ist eine dritte Variante der Formeinheit 10 für das erfindungsgemäße Verfahren dargestellt. Dabei umfasst die Formeinheit 10 hier zwei Drehelemente 28, die jeweils um eine Drehachse DA, welche senkrecht zur Förderrichtung F verläuft drehbar sind. Die Drehachsen DA sind dabei hier insbesondere parallel zueinander. Das Stranggut 2 wird dann zwischen den Drehelementen 28 hindurch gefördert. Auf dem Umkreis eines jeweiligen der Drehelemente 28 ist dann ein Formnest 22 angeordnet zur Ausbildung von Formteilen 12 aus dem Material des Mantels 6. Dazu werden die Drehelemente 28 um deren jeweilige Drehachse DA gedreht, sodass die Formnester 22 jeweils in einer Umlaufrichtung U entlang des Umkreises verschoben werden. Durch eine entsprechende Anpassung der Drehgeschwindigkeit der Drehelemente 28 und der Fördergeschwindigkeit des Strangguts 2 wird dann die Relativbewegung R der Formnester 22 bezüglich des Strangguts 2 eingestellt. Durch insbesondere kontinuierliches Drehen werden in einer Ausführungsform in bestimmten vorgegebenen Längenabständen dann mehrere entsprechend in Längsrichtung L voneinander beabstandete Formteile 12 aus dem Mantel 6 des Strangguts 2 ausgeformt.

Die Drehelemente 28 weisen senkrecht zur Förderrichtung F einen Achsabstand AA auf, der in der hier gezeigten Variante einstellbar ist. Mit anderen Worten: die Drehelemente 28 sind jeweils relativ zum Stranggut 2 verschiebbar, sodass die Formnester 22 bedarfsweise an das Stranggut herangefahren oder von diesem weggenommen werden. Die Drehelemente 28 dienen dann bei der Fertigung vorrangig der Erhöhung der Produktionsgeschwindigkeit durch Mitführen der Formnester 22. Der Abstand zweier Formteile 12 zueinander wird dagegen dadurch bestimmt, zu welchem Zeitpunkt die Drehelemente 28 an das Stranggut herangefahren werden.

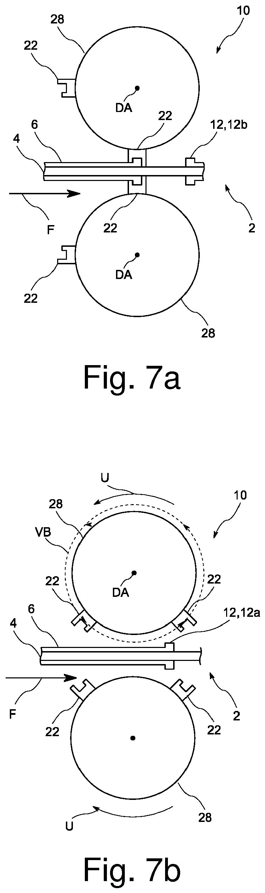

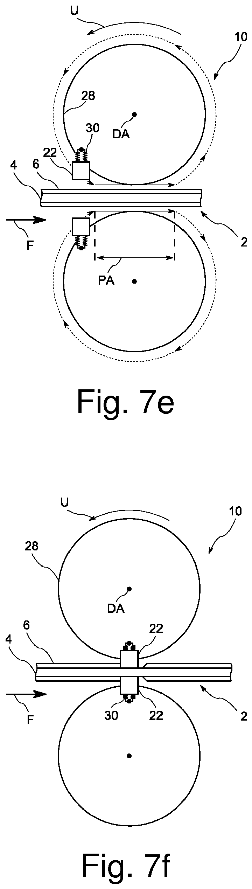

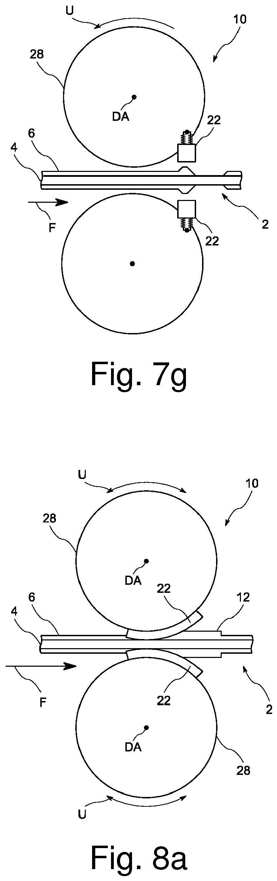

In den Fig. 7a bis 7c ist eine vierte Variante der Formeinheit 10 in Anlehnung an die Anordnung gemäß Fig. 6 dargestellt. Bei dieser vierten Variante sind an einem Drehelement 28 mehrere insbesondere unterschiedliche Formnester 22 montiert, mittels derer dann entsprechend unterschiedliche Formteile 12, hier insbesondere frontseitige Formteile 12a und rückseitige Formteile 12b ausgebildet werden. Dazu werden die Formnester 22 durch Drehung in entsprechender Richtung an das Stranggut 2 herangefahren und auf diese Weise je nach Konfiguration unterschiedliche Formkammern 24 ausgebildet.

So zeigt Fig. 7a die Ausbildung eines frontseitigen Formteils 12a, durch das gezeigte Zusammenführen der entsprechenden Formnester 22. Durch Förderung des Strangguts 2 in Förderrichtung F wird dann angestautes Material des Mantels 6 in der gebildeten Formkammer 24 gesammelt und auf diese Weise das Formteil 12a ausgebildet. Durch Drehung in der in Fig. 7b angezeigten Umfangsrichtung U wird dann die Formeinheit 10 geöffnet und das Stranggut 2 unbeeinflusst von dieser in Förderrichtung F gefördert, zur Ausbildung eines regulären Stranggutabschnitts A2. Die Formnester 22 werden somit entlang einer Bahn VB verfahren, die hier kreisförmig ist.

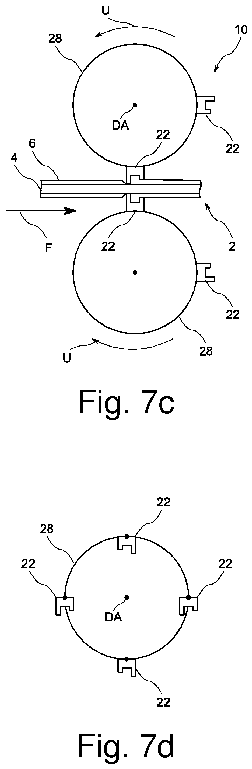

Fig. 7c zeigt dann die Ausbildung eines rückseitigen Formteils 12b durch erneutes Drehen in gleicher Umfangsrichtung U und entsprechendes Zusammenführen der anderen beiden Formnester 22. Zum Anstauen von Material ist es in dieser Konfiguration der Fig. 7c insbesondere notwendig, das Stranggut 2 relativ zur Formkammer 24 entgegen der Förderrichtung F zu bewegen. Dies wird beispielsweise entweder dadurch erzielt, dass während des Anstauens das Drehelement 28 weitergedreht wird und zwar derart, dass die Umfangsgeschwindigkeit der Formnester 22 größer ist als die Fördergeschwindigkeit des Strangguts 2, wobei alternativ auch die Förderung des Strangguts 2 ausgesetzt wird, oder dadurch, dass die Drehelemente 28 in der in Fig. 7c gezeigten Position fixiert und dagegen das Stranggut 2 entgegen der ursprünglichen Förderrichtung F zurückgefördert.

In Fig. 7d ist ein Drehelement 28 einer fünften Variante der Formeinheit 10 gezeigt, bei welcher die Formnester 22 jeweils drehbar am Drehelement 28 angebracht oder aufgehängt sind. Dadurch wird eine Parallelführung der Formnester erreicht, durch welche sich ein verbesserter Kontakt zweier zusammengeführter Formnester 22 bei der Bildung einer entsprechenden Formkammer 24 ergibt.

Die Fig. 7e bis 7g zeigen eine sechste Variante der Formeinheit 10, bei der die Formnester 22 ähnlich wie in Fig. 7d drehbar aufgehängt sind und zusätzlich dazu noch verschiebbar gelagert. Dazu ist jedes Formnest 22 über ein Verschiebeelement 30 verschiebbar. In dem hier gezeigten Ausführungsbeispiel sind die Verschiebeelemente 30 als Federelemente ausgebildet. Beim Zusammenführen zweier Formnester 22 werden diese dann relativ zum Drehelement 28 verschoben, sodass sich eine entsprechende Abweichung von der Kreisbahn ergibt und die Formnester stattdessen auf einer Bahn VB verschoben werden, die abschnittsweise parallel zur Förderrichtung F verläuft, nämlich auf einem Parallelabschnitt PA. Die Formnester 22 werden somit beim Heranfahren an das Stranggut 2 verschoben, hier zur Drehachse DA hin, dann entlang des Parallelabschnitts PA parallel zum Stranggut 2 geführt und abschließend wieder abgehoben, wobei das Verschiebeelement 30 wieder in die Ausgangsposition gefahren wird. Durch die zusätzliche drehbare Ausgestaltung der Formnester 22 ist dann trotz den rotierenden Drehelementen 28 eine vorteilhafte Parallelführung realisiert.

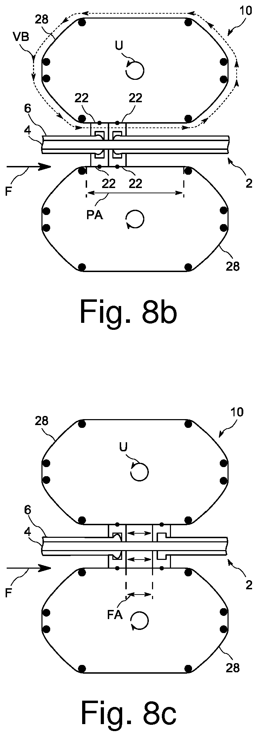

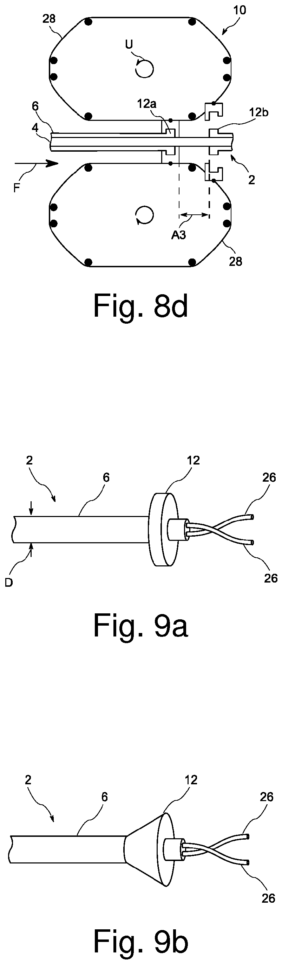

Die Fig. 8a zeigt eine siebte Variante der Formeinheit 10, welche der in den Fig. 6 und 7a bis 7f gezeigten Ausführungen dahingehend ähnlich ist, dass auch hier Formnester 22 in einer Umfangsrichtung U durch Drehung von Drehelementen 28 verschiebbar sind. Dabei sind hier die Formnester 22 insbesondere mit einer gebogenen Außenkontur K ausgeführt, um zur Ausbildung eines langen Formteils 12 die Drehung, d.h. Verschiebung auf einer gebogenen Bahn VB in eine gerade Formteilkontur zu übersetzen.

In den Fig. 8b bis 8d ist jeweils ein Verfahrensschritt dargestellt zur Ausbildung sowohl eines rückseitigen als auch eine frontseitigen Formteils 12 mittels einer achten Variante der Formeinheit 10. Die Drehelemente 28 sind hier als Ketten, Riemen oder Förderbänder nach Art einer Raupe ausgebildet, wodurch die Formnester 22 auf einer im Wesentlichen beliebig gestaltbaren Bahn VB verfahren werden, welche in dem gezeigten Beispiel in etwa achteckig ist. Die Bahn VB weist dabei einen Parallelabschnitt PA auf, auf welchem die Formnester 22 parallel zum Stranggut 2 geführt werden, insbesondere in zusammengeführtem Zustand.

In dem Beispiel der Fig. 8b bis 8d werden mittels jeweils eines Drehelements 28 zwei Formnester 22 verfahren, wobei eines derselben zur Ausbildung eines frontseitigen Formteils 12a dient und das andere zur Ausbildung eines rückseitigen Formteils 12b. Um zwischen diesen beiden Formteilen 12a, 12b zusätzlich insbesondere einen Freiabschnitt A3, alternativ einen Stranggutabschnitt A2, auszubilden, sind die beiden Formnester 22 entlang der Bahn VB gegeneinander verschiebbar. Mit anderen Worten: die an einem jeweiligen Drehelement 28 montierten Formnester 22 weisen zueinander einen Formnestabstand FA auf, der einstellbar ist. Das eine der beiden Formnester 22 wird in zusammengeführtem Zustand mit dem zugehörigen Formnest 22 des anderen Drehelements 28 entlang der Förderrichtung F verschoben, sodass der Formnestabstand FA vergrößert und der Freiabschnitt A3 ausgebildet wird. Durch die insgesamt vier Formnester 22 werden also zwei Formkammern 24 gebildet, welche gegeneinander verschoben werden.

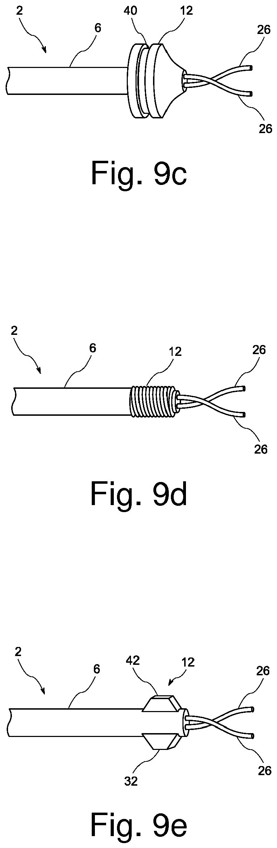

Die Fig. 9a bis 9f zeigen jeweils ein Ausführungsbeispiel des als Kabel ausgebildeten Strangguts 2, welches mittels des erfindungsgemäßen Verfahrens hergestellt wurde. Die hier lediglich exemplarisch gezeigten Kabel umfassen jeweils eine Kabelseele, d.h. hier Seele 4 mit mehreren Adern 26, welche von einem gemeinsamen Mantel 6 umgeben sind. Aus diesem sind jeweils unterschiedliche Formteile 12 ausgeformt. So zeigt Fig. 9a ein scheiben- oder zylinderförmiges Formteil 12, während in Fig. 9b ein konisches Formteil 12 aus dem Mantel 6 ausgebildet ist. In Fig. 9c ist das Formteil 12 ein Dichtelement mit einer Umlaufnut 50, d.h. einer umlaufenden Nut, beispielsweise zum Einsetzen in eine nicht gezeigte Gehäusefront.

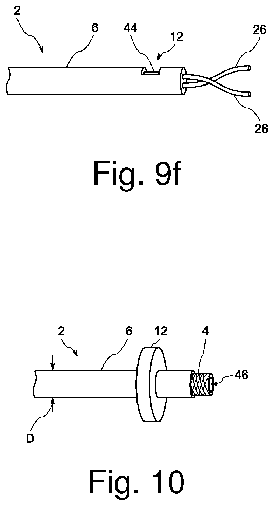

In Fig. 9d ist das Formteil 12 als Gewinde ausgebildet. In Fig. 9e umfasst das Formteil 12 mehrere in Längsrichtung L verlaufende Flügel 52, die sich vom Mantel 6 ausgehend in radialer Richtung nach außen erstrecken. Fig. 9f schließlich zeigt eine Ausnehmung 54 im Mantel 6, welche insbesondere dadurch realisiert wurde, dass das angestaute Material teilweise oder vollständig vom Mantel 6 abgetrennt wurde.

Fig. 10 zeigt ein Ausführungsbeispiel des als Schlauch ausgebildeten Strangguts 2, welches mittels des erfindungsgemäßen Verfahrens hergestellt wurde. Der hier lediglich exemplarisch gezeigte Schlauch umfasst eine Seele 4, d.h. hier eine Schlauchseele. Diese weist beispielsweise einen nicht näher bezeichneten Innenmantel und ein darauf aufgebrachtes Geflecht auf. Allgemein schließt die Seele 2 bei einem Schlauch einen Hohlraum 46 ein. Auf die Seele 4 ist ein Mantel 6 aufgetragen ist, aus welchem ein Formteil 12 ausgeformt ist. Prinzipbedingt sind jegliche in den Fig. 9a bis 9f gezeigten Varianten des Formteils 12 auch an einem als Schlauch ausgebildeten Stranggut 2 herstellbar.

Die Vielzahl und Unterschiedlichkeit der gezeigten Ausführungsbeispiele für das Stranggut 2 machen deutlich, dass durch entsprechende Gestaltung der Formeinheit 10 nahezu beliebige Formteile 12 aus dem Mantel 6 ausformbar sind.

## Patentansprüche

1. Verfahren zur Herstellung, insbesondere Endlosherstellung, eines Strangguts (2), bei dem
- eine Seele (4) des Strangguts (2) kontinuierlich durch einen Extrusionskopf einer Extrusionseinheit (8) gefördert wird,
- mittels der Extrusionseinheit (8) und mit unverändertem Materialfluss auf die Seele (4) ein Material als gleichmäßiger Mantel (6) mit einer vorgegebenen Wandstärke (W) aufextrudiert wird,
wobei das Stranggut (2) hinter der Extrusionseinheit (8) und während das Material noch formbar ist in einer Förderrichtung (F) einer Formeinheit (10) zugeführt wird, **dadurch gekennzeichnet, dass** ein Teil des Materials mittels der Formeinheit (10) entlang der Förderrichtung (F) angestaut wird, indem ebenjener Teil des Materials gegenüber dem restlichen Material verschoben wird, und
dass aus dem angestauten Material am Mantel (6) einstückig ein Formteil (12) ausgebildet wird.

2. Verfahren nach Anspruch 1,
**dadurch gekennzeichnet,**
**dass** zum Anstauen des Materials die Formeinheit (10) geschlossen wird und diese nach dem Ausbilden des Formteils (12) geöffnet wird.

3. Verfahren nach Anspruch 1 oder 2,
**dadurch gekennzeichnet,**
**dass** beim Anstauen des Materials die Formeinheit (10) in Förderrichtung (F) bewegt wird, mit einer Geschwindigkeit, die größer ist als eine Fördergeschwindigkeit des Strangguts (2), zur Ausbildung eines rückseitigen Formteils (12b).

4. Verfahren nach einem der Ansprüche 1 bis 3,
**dadurch gekennzeichnet,**
**dass** mehrere Formteile (12) an mehreren, periodisch wiederkehrenden Längenpositionen ausgebildet werden und/oder
**dass** zwischen zwei in Förderrichtung (F) aufeinanderfolgenden Längenpositionen ein regulärer Stranggutabschnitt (A2) ausgebildet wird, der frei von Formteilen (12) ist.

5. Verfahren nach einem der Ansprüche 1 bis 4,
**dadurch gekennzeichnet,**
**dass** mittels der Formeinheit (10) der Mantel (6) auf einem Längsabschnitt des Strangguts (2) vollständig entfernt wird und dadurch ein Freiabschnitt (A3) ausgebildet wird, auf welchem das Stranggut (2) anschließend insbesondere konfektioniert wird.

6. Verfahren nach einem der Ansprüche 1 bis 5,
**dadurch gekennzeichnet,**
**dass** in einer Formkammer (24) der Formeinheit (10) das angestaute Material aufgenommen und das Formteil (12) ausgebildet wird,
wobei das Formteil (12) vorzugsweise durch Ausfüllen der Formkammer (24) mit angestautem Material ausgebildet wird.

7. Verfahren nach Anspruch 6,
**dadurch gekennzeichnet,**
**dass** die Formkammer (24) dadurch gebildet wird, dass mehrere Formnester (22) der Formeinheit (10) zusammengeführt werden.

8. Verfahren nach Anspruch 7,
**dadurch gekennzeichnet,**
**dass** zum Anstauen des Materials die Formnester (22) verschoben werden und die Formnester (22) in zusammengeführtem Zustand die Formkammer (24) bilden.

9. Verfahren nach einem der Ansprüche 7 oder 8,
**dadurch gekennzeichnet,**
**dass** die Formnester (22) jeweils auf einem Drehelement (28) montiert sind und durch Drehung des Drehelements (28) zusammen- und auseinandergeführt werden.

10. Verfahren nach Anspruch 9,
**dadurch gekennzeichnet,**
**dass** ein jeweiliges Formnest (22) eine gebogene Außenkontur (K) aufweist, wobei das Formnest (22) an eine Umfangsbahn des Drehelementes (28) angepasst ist, zur Ausbildung eines langen Formteils (12) beim Abrollen des Formnestes (22) am Stranggut (2).

11. Verfahren nach einem der Ansprüche 7 bis 10,
**dadurch gekennzeichnet,**
**dass** die Formnester (22) jeweils mittels eines Verschiebeelements (30) angebracht sind und mittels diesem zumindest beim Zusammenführen verschoben und/oder gedreht werden.

12. Verfahren nach einem der Ansprüche 7 bis 11,
**dadurch gekennzeichnet,**
**dass** die Formnester (22) Jeweils entlang einer Bahn (VB) verfahren werden, welche zumindest abschnittsweise parallel zur Förderrichtung (F) verläuft und zwar auf einem Parallelabschnitt (PA).

13. Verfahren nach Anspruch 12,
**dadurch gekennzeichnet,**
**dass** zumindest zwei Formnester (22) entlang des gleichen Parallelabschnitts (PA) verfahren werden und die zumindest zwei Formnester (22) einen einstellbaren Formnestabstand (FA) aufweisen.

14. Verfahren nach Anspruch 13,
**dadurch gekennzeichnet,**
**dass** der Formnestabstand (FA) beim Verfahren der zumindest zwei Formnester (22) entlang des Parallelabschnitts (PA) verändert wird.

15. Verwendung einer Vorrichtung zur Herstellung eines Strangguts (2) mit Hilfe eines Verfahrens gemäß einem der Ansprüche 1 bis 14 umfassend eine Extrusionseinheit (8) sowie eine diesem nachfolgende Formeinheit (10).

## Claims

1. Method for producing, in particular continuously producing, an elongated product (2), in which:
- a core (4) of the elongated product (2) is continuously conveyed through an extrusion head of an extrusion unit (8),
- by means of the extrusion unit (8) and with unchanged material flow, a material is extruded onto the core (4) as a uniform sheath (6) with a predetermined wall thickness (W),
wherein, downstream of the extrusion unit (8) and while the material is still mouldable, the elongated product (2) is fed in a conveying direction (F) to a moulding unit (10),
**characterized**
**in that** part of the material is backed up along the conveying direction (F) by means of the moulding unit (10), in that this particular part of the material is displaced with respect to the rest of the material, and
**in that** a moulded part (12) is integrally formed on the sheath (6) from the backed-up material.

2. Method according to Claim 1,
**characterized**
**in that**, for the backing up of the material, the moulding unit (10) is closed and it is opened after the forming of the moulded part (12).

3. Method according to Claim 1 or 2,
**characterized**
**in that**, when backing up the material, the moulding unit (10) is moved in the conveying direction (F), at a speed that is greater than a conveying speed of the elongated product (2), to form a rear moulded part (12b).

4. Method according to one of Claims 1 to 3,
**characterized**
**in that** multiple moulded parts (12) are formed at multiple periodically recurring positions along the length and/or
**in that** a regular portion of the elongated product (A2) that is free from moulded parts (12) is formed between two positions along the length following one another in the conveying direction (F).

5. Method according to one of Claims 1 to 4,
**characterized**
**in that**, by means of the moulding unit (10), the sheath (6) is completely removed over a longitudinal portion of the elongated product (2) and a free portion (A3), on which the elongated product (2) is subsequently fabricated in particular, is thereby formed.

6. Method according to one of Claims 1 to 5,
**characterized**
**in that**, in a moulding chamber (24) of the moulding unit (10), the backed-up material is received and the moulded part (12) is formed,
wherein the moulded part (12) is preferably formed by filling the moulding chamber (24) with backed-up material.

7. Method according to Claim 6,
**characterized**
**in that** the moulding chamber (24) is formed by multiple mould cavities (22) of the moulding unit (10) being brought together.

8. Method according to Claim 7,
**characterized**
**in that**, for backing up the material, the mould cavities (22) are displaced and, in the brought-together state, the mould cavities (22) form the moulding chamber (24).

9. Method according to either of Claims 7 and 8,
**characterized**
**in that** the mould cavities (22) are respectively mounted on a rotary element (28) and are brought together and moved apart by turning of the rotary element (28).

10. Method according to Claim 9,
**characterized**
**in that** a respective mould cavity (22) has an arcuate outer contour (K), wherein the mould cavity (22) is adapted to a circumferential path of the rotary element (28), for the forming of a long moulded part (12) when the mould cavity (22) rolls on the elongated product (2).

11. Method according to one of Claims 7 to 10,
**characterized**
**in that** the mould cavities (22) are respectively applied by means of a displacing element (30) and, at least when they are being brought together, are displaced and/or turned by means of the latter.

12. Method according to one of Claims 7 to 11,
**characterized in that** the mould cavities (22) are respectively moved along a path (VB), which at least in certain portions runs parallel to the conveying direction (F), to be precise on a parallel portion (PA).

13. Method according to Claim 12, **characterized**
**in that** at least two mould cavities (22) are moved along the same parallel portion (PA) and the at least two mould cavities (22) have an adjustable mould cavity spacing (FA).

14. Method according to Claim 13,
**characterized**
**in that** the mould cavity spacing (FA) is changed when the at least two mould cavities (22) are being moved along the parallel portion (PA).

15. Use of a device for producing an elongated product (2) with the aid of a method according to one of Claims 1 to 14 comprising an extrusion unit (8) and also a moulding unit (10) downstream of the latter.

## Revendications

1. Procédé de production, en particulier de production continue, d'un produit en barre (2), procédé dans lequel
- un noyau (4) du produit en barre (2) est transporté en continu à travers une tête d'extrusion d'une unité d'extrusion (8),
- un matériau est extrudé sous la forme d'une enveloppe uniforme (6) ayant une épaisseur de paroi prédéterminée (W) au moyen de l'unité d'extrusion (8) et avec un flux de matériau inchangé sur le noyau (4),
le produit en barre (2) étant amené à une unité de moulage (10) dans une direction de transport (F) derrière l'unité d'extrusion (8) et pendant que le matériau peut encore être moulé, **caractérisé en ce que** une partie du matériau est accumulée le long de la direction de transport (F) au moyen de l'unité de moulage (10) du fait que la même partie du matériau est déplacée par rapport au matériau restant, et
une pièce moulée (12) est formée d'une seule pièce à partir du matériau accumulé au niveau de l'enveloppe (6) .

2. Procédé selon la revendication 1,
**caractérisé en ce que**
l'unité de moulage (10) est fermée pour accumuler le matériau et celle-ci est ouverte après que la pièce moulée (12) a été moulée.

3. Procédé selon la revendication 1 ou 2, caractérisé en que
l'unité de moulage (10) est déplacée, pendant l'accumulation du matériau, dans la direction de transport (F) à une vitesse qui est supérieure à une vitesse de transport du produit en barre (2) afin de former une pièce moulée arrière (12b).

4. Procédé selon l'une des revendications 1 à 3,
**caractérisé en ce que**
une pluralité de pièces moulées (12) sont formées en plusieurs positions de longueur périodiquement récurrentes et/ou
une portion de produit en barre régulière (A2), qui est exempte de pièces moulées (12), est formée entre deux positions de longueur successives dans la direction de transport (F).

5. Procédé selon l'une des revendications 1 à 4,
**caractérisé en ce que**
l'enveloppe (6) est complètement enlevée au moyen de l'unité de moulage (10) sur une portion longitudinale du produit en barre (2) et ainsi une portion libre (A3) est formée sur laquelle notamment le produit en barre (2) est ensuite confectionné.

6. Procédé selon l'une des revendications 1 à 5,
**caractérisé en ce que**
le matériau accumulé est reçu dans une chambre de moulage (24) de l'unité de moulage (10) et la pièce moulée (12) est formée, la pièce moulée (12) étant de préférence formée par remplissage de la chambre de moulage (24) avec du matériau accumulé.

7. Procédé selon la revendication 6,
**caractérisé en ce que**
la chambre de moulage (24) est formée par réunion d'une pluralité de cavités de moulage (22) de l'unité de moulage (10).

8. Procédé selon la revendication 7,
**caractérisé en ce que**
les cavités de moulage (22) sont déplacées pour accumuler le matériau et les cavités de moulage (22) forment la chambre de moulage (24) à l'état assemblé.

9. Procédé selon l'une des revendications 7 et 8,
**caractérisé en ce que**
les cavités de moulage (22) sont chacune montées sur un élément rotatif (28) et sont rapprochées et éloignées par rotation de l'élément rotatif (28).

10. Procédé selon la revendication 9,
**caractérisé en ce que**
une cavité de moulage respective (22) présente un contour extérieur incurvé (K), la cavité de moulage (22) étant adaptée à une piste périphérique de l'élément rotatif (28) pour former une pièce moulée longue (12) lorsque la cavité de moulage (22) roule sur le produit en barre (2).

11. Procédé selon l'une des revendications 7 à 10,
**caractérisé en ce que**
les cavités de moulage (22) sont chacune montées au moyen d'un élément de déplacement (30) et sont déplacées en translation et/ou en rotation au moyen de celui-ci au moins lorsqu'elles sont assemblées.

12. Procédé selon l'une des revendications 7 à 11,
**caractérisé en ce que**
les cavités de moulage (22) sont chacune déplacées le long d'une piste (VB) qui s'étend au moins en partie parallèlement à la direction de transport (F), spécifiquement sur une portion parallèle (PA).

13. Procédé selon la revendication 12,
**caractérisé en ce que**
au moins deux cavités de moulage (22) sont déplacées le long de la même portion parallèle (PA) et les au moins deux cavités de moulage (22) présentent un espacement de cavité de moulage (FA) réglable.

14. Procédé selon la revendication 13,
**caractérisé en ce que**
l'espacement de cavité de moulage (FA) est modifié lors du déplacement des au moins deux cavités de moulage (22) le long de la portion parallèle (PA).

15. Utilisation d'un dispositif de production d'un produit en barre (2) à l'aide d'un procédé selon l'une des revendications 1 à 14, ledit dispositif comprenant une unité d'extrusion (8) et une unité de moulage (10) disposée en aval de celle-ci.
